# EUROPEAN PATENT SPECIFICATION

(11) **EP 2 284 932 B1**
(45) Date of publication and mention of the grant of the patent: **05.06.2013**
(21) Application number: 10169791.0
(22) Date of filing: 16.07.2010
(51) Int. Cl.: H01M 2/34, H01M 2/12, H01M 2/30, H01M 2/04, H01M 10/04

(54) **Rechargeable battery**
Wiederaufladbare Batterie
Batterie rechargeable

(30) Priority: 14.08.2009 US 234117 P; 07.07.2010 US 832023
(43) Date of publication of application: 16.02.2011
(73) Proprietor: Samsung SDI Co., Ltd., Gyeonggi-do (KR); Robert Bosch GmbH, 70442 Stuttgart (DE)
(72) Inventor: Byun, Sang-Won, Gyeonggi-do (KR); Kim, Yong-Sam, Gyeonggi-do (KR); Kim, Hyo-Seob, Gyeonggi-do (KR)
(74) Representative: Gulde Hengelhaupt Ziebig & Schneider

(56) References cited:
- EP-A2- 1 076 350
- JP-A- 10 326 610
- JP-A- 11 007 931
- US-A- 5 523 178

## Description

### Field of the invention

The described technology relates generally to a rechargeable battery having a safety apparatus that can prevent explosion by solving an overcharge condition.

### Description of the Related Art

Unlike a primary battery that cannot be recharged, a rechargeable battery can be repeatedly charged and discharged. Low-capacity rechargeable batteries are used for portable compact electronic apparatuses such as mobile phones, notebook computers, and camcorders and high-capacity rechargeable batteries are widely used as a power source for driving a motor of a hybrid vehicle, etc.

Recently, a high-output rechargeable battery using a non-aqueous electrolyte having high energy density has been developed. The high-output rechargeable battery is configured with high capacity by connecting a plurality of unit rechargeable batteries in series so as to be used for driving a motor for an apparatus requiring a large amount of power, i.e., an electrical vehicle, etc.

In addition, one large-capacity rechargeable battery is formed of a plurality of rechargeable batteries coupled in series, and the rechargeable battery may be formed in a cylindrical or prismatic shape.

The prismatic rechargeable battery includes an electrode assembly that has a positive electrode and a negative electrode with a separator interposed there between, a case having a space for incorporating the electrode assembly, a cap plate that seals the case and has a terminal hole into which an electrode terminal is inserted, and an electrode terminal that is electrically connected with the electrode assembly and is inserted into the terminal hole to protrude outside of the case.

When excessive heat is generated inside the rechargeable battery or internal pressure is increased due to dissolution of an electrolyte solution, the battery may explode or combust. Particularly, in the case of the prismatic battery, it is not easy to have a structure that cuts off or discharges current due to its specific characteristics of the terminal structure, compared to the cylindrical battery.

US 5 523 178 A discloses a chemical cell equipped with a safety mechanism which can restrict an abnormal reaction of the cell and prevent gas explosion. The safety mechanism includes a complicated structure comprising a valve, a piston, a spring and a breakable spacer element. JP 11 007981 A and JP 10 326610 A disclose a short-circuit element with a temperature switch formed of a bimetal. However, inside a battery, the temperature may be increased and distributed to the bimetal with a time delay.

The above information disclosed in this Background section is only for enhancement of understanding of the background of the described technology and therefore it may contain information that does not form the prior art that is already known in this country to a person of ordinary skill in the art.

### SUMMARY

The described technology has been made in an effort to provide a rechargeable battery that is improved in safety.

A rechargeable battery according to the invention is disclosed in claim 1.

A rechargeable battery according to an example includes an electrode assembly having a first electrode, a second electrode, and a separator interposed between the first and the second electrodes. The battery further includes a case for mounting the electrode assembly therein and a cap assembly comprising a cap plate for closing an opening of the case, and a pressure-deformable plate attached to the cap plate. The pressure-deformable plate is in communication with the inside of the battery and is adapted to be deformed to short-circuit the first electrode and the second electrode, wherein the pressure-deformable plate comprises a notch. Further, a short-circuit hole is provided in the cap plate, and the pressure-deformable plate communicates with the inside of the battery via the short-circuit hole.

The notch is preferably designed to provide a predetermined breaking point of the pressure-deformable plate. The notch is even more preferably provided in a central position of the pressure-deformable plate.

According to the exemplary embodiment of the present invention, a short circuit is provoked when internal pressure of the rechargeable battery is increased so as to prevent explosion or combustion of the rechargeable battery, and the notch of the pressure-deformable plate is broken when the pressure is further increased so as to prevent explosion of the rechargeable battery.

Through the above arrangement the pressure-deformable plate is able to react on a pressure increase inside the battery.

The pressure-deformable plate is adapted to be deformed upon an increase of an internal pressure inside the case to short-circuit the first electrode and the second electrode. In order to do so, the pressure-deformable plate is made of conductive material. In a preferred embodiment the pressure-deformable plate is electrically connected to the second electrode via the cap plate. The pressure-deformable plate may be inserted into or placed below the short circuit hole formed in the cap plate. The pressure-deformable plate may comprise a curved or an arc or a convex shaped deformation portion, curved toward and protruding into the interior of the battery. It may comprise an outer frame portion formed in a ring-shape being attached to the cap plate and surrounding a deformation portion adapted to be deformed and having an arc or convex shape protruding towards the interior of the battery, the notch being formed within the deformation portion.

The structure and placement of the rechargeable battery results in a twofold function of the pressure-deformable plate, i.e. sealing the interior of the battery and short-circuiting the battery in case of an increase of internal pressure inside the battery. The curved or convex shape of the pressure-deformable plate establishes a resilient force of the pressure-deformable plate against deformation. Furthermore, the curved or arc or convex-to-concave shape of the pressure-deformable plate helps establishing a large contact area with the first tab.

The cap assembly further comprises a first tab located outside of the case. The first tab is electrically connected to the first electrode. The pressure-deformable plate is adapted to be deformed such that it contacts the first tab and thereby the first electrode.

The first tab provides a connection to the first electrode for establishing the short.

Advantageously, a contact-space of the pressure-deformable plate and the first tab is separated from a space of the electrolyte solution inside the battery so that combustion of the electrolyte solution may be prevented when the short-circuit is formed.

The cap assembly may further comprise an upper insulation member such that the first tab is coupled to the cap plate with the upper insulation member interposed there between to electrically isolate the first tab from the cap plate.

The upper insulation member preferably has a shape with an opening into which the first tab is inserted such that the edge of the upper insulation member surrounds a side end of the first tab.

The upper insulation member safely supports the first tab, also called short-circuit tab. Therefore, deformation caused by deformation of the pressure-deformable plate may be minimized. Thus, the first tab and the pressure-deformable plate can maintain a stable contact state.

In one embodiment the first tab comprises a vent hole formed at a position corresponding to the position of the short circuit hole. The vent hole is preferably formed directly above the short circuit hole.

Advantageously, this allows the formation of a vent upon a pressure increase inside the battery without providing an additional vent hole in the cap plate. Furthermore, heat can be emitted to the outside through the first tab formed outside of the case so that excessive heat accumulation inside the case can be prevented.

The vent hole may have a round shape, a circular cross section, a cone like or truncated cone like shape, and/or is provided with a cross section having an upwardly decreasing diameter.

Furthermore, a middle member is preferably provided between the first tab and the pressure-deformable plate. The middle member helps to maintain the short circuit.

The middle member is preferably attached to the pressure-deformable plate. It may have a larger thickness than the pressure-deformable plate. It may be formed of a cylindrical shape. The middle member may be welded along its lower end circumference to the pressure-deformable plate. It may be arranged such that its upper surface is disposed in parallel to the first tab. The middle member preferably comprises a hole formed at a location corresponding to that of the notch of the pressure-deformable plate and/or is preferably formed at a location corresponding to that of the short circuit hole in order to establish venting.

The cap assembly may further comprise a first terminal protruding to the outside of the cap plate and electrically connected to the first electrode and the first tab, and/or a gasket interposed between the cap plate and the first terminal to insulate the cap plate and the first terminal from each other.

The cap assembly may further comprise a second terminal connected to the second electrode protruding to the outside of the battery and a gasket for sealing the cap plate in the region of the second terminal, and a connection tab for electrically connecting the second terminal and the cap plate such that the pressure-deformable plate contacts the second terminal via the cap plate and the pressure-deformable plate is adapted to contact the first terminal via the first tab.

In one embodiment the battery further comprises a second tab connected to the second electrode being insulated from the cap plate by an insulating member, the first tab and the second tab being provided with protrusions which extend into the short-circuit hole formed in the cap plate. The pressure-deformable plate is preferably adapted to be deformed such that it contacts the protrusions of the first tab and the second tab to thereby short-circuiting the first electrode and the second electrode.

The invention is further directed to a method of providing venting and short-circuiting of a rechargeable battery, the method comprising the steps of providing a first tab on a cap plate of a battery, the first tab being connected to the first electrode of the battery; providing a pressure-deformable plate attached to the cap plate of the battery and being electrically connected to a second electrode of the battery; providing a short-circuit hole in the cap plate, the pressure-deformable plate being in communication with the inside of the battery through the short-circuit hole; deforming the pressure-deformable plate upon an increase of internal pressure inside the battery; making contact between the pressure-deformable plate and the first tab of the battery as a result of the deformation of the pressure-deformable plate and thus short-circuiting the first and the second electrodes of the battery to prevent its explosion or combustion; and breaking a notch of the pressure-deformable plate to provide venting of the interior of the battery; and venting of gas from the interior of the battery through the short-circuit hole and the notch of the pressure-deformable plate.

In this way, the battery allows short-circuiting the electrodes and venting of the battery by deforming a single element, the inventive pressure-deformable plate.

### BRIEF DESCRIPTION OF THE DRAWINGS

FIG. 1 is a perspective view of a rechargeable battery according to a first exemplary embodiment of the present invention.
FIG. 2 is a cross-sectional view of FIG. 1, taken along the line II-II.
FIG. 3A is a cross-sectional view of a contact state of a deformed deformable plate and a short tab according to the first exemplary embodiment of the present invention, and FIG. 3B is a cross-sectional view of a broken state of a notch according to the first exemplary embodiment of the present invention.
FIG. 4 is a cross-sectional view of a rechargeable battery according to a second exemplary embodiment of the present invention.
FIG. 5 is a cross-sectional view of a rechargeable battery according to a third exemplary embodiment of the present invention.
FIG. 6A is a cross-sectional view of a contact state of a deformed deformable plate and a short tab according to the third exemplary embodiment of the present invention, and FIG. 6B is a cross-sectional view of a broken state of a notch according to the third exemplary embodiment of the present invention.
FIG. 7 is a cross-sectional view of a rechargeable battery according to a fourth exemplary embodiment of the present invention.
FIG. 8 is a cross-sectional view of a rechargeable battery according to a fifth exemplary embodiment of the present invention.
FIG. 9 is a top plan view of the rechargeable battery according to the fifth exemplary embodiment of the present invention.

### DETAILED DESCRIPTION

In the specification, "deformable plate" includes all types of plates that can be deformed according to a pressure increase, and the shape of the plate is not limited. This plate may also be called "inversion plate" since it inverses its shape from convex to concave upon a pressure increase inside the battery.

Hereinafter, exemplary embodiments of the present invention will be described in detail with reference to the accompanying drawings such that those having ordinary skill in the art to which the present invention pertains may easily implement the technological concept of the present invention. However, the present invention may be implemented in various different ways, and is not limited to the following exemplary embodiments. Like reference numerals designate like constituent elements throughout the specification.

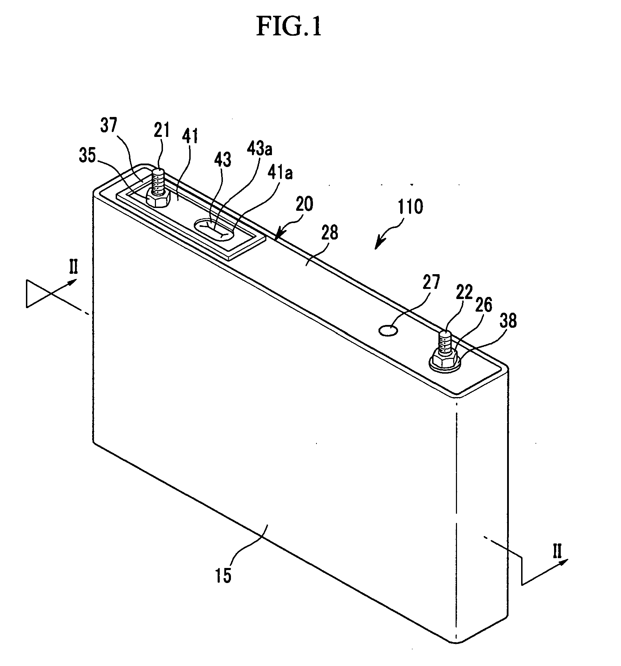

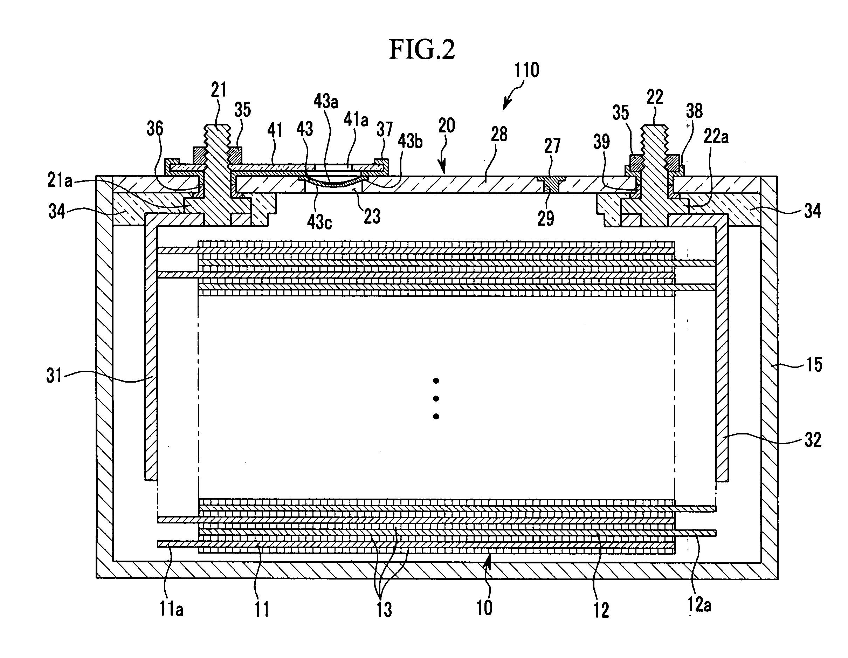

FIG. 1 is a perspective view of a rechargeable battery 110 according to a first exemplary embodiment of the present invention, and FIG. 2 is a cross-sectional view of FIG. 1, taken along the line II-II. Referring to FIG. 1 and FIG. 2, a rechargeable battery 110 according to the present exemplary embodiment includes an electrode assembly 10 wound by disposing an insulated separator 13 between a first electrode 11 and a second electrode 12, a case 15 to which the electrode assembly 10 is installed, and a cap assembly 20 combined to an opening of the case 15.

The rechargeable battery 110 according to the first exemplary embodiment is exemplarily a prismatic type of lithium ion secondary battery. However, the present invention is not limited thereto, and the present invention may be applied to various types of batteries such as a lithium polymer battery or a cylindrical battery.

The first electrode 11 and the second electrode 12 include coated regions and uncoated regions in a current collecting body that is formed of a thin plate metal foil. The coated regions are coated with an active material and the uncoated regions are not coated with the active material. In the present exemplary embodiment, the first electrode 11 is a positive electrode and the second electrode 12 is a negative electrode. However, the present invention is not limited thereto. Therefore, the first electrode 11 may be a negative electrode and the second electrode 12 may be a positive electrode.

A first electrode uncoated region 11a is formed at one side of the first electrode 11 along a length direction of the first electrode 11, and a second electrode uncoated region 12a is formed at one side of the second electrode 12 along a length direction of the second electrode 12. In addition, the first electrode 11 and the second electrode 12 interpose the separator 13, which is an insulator, there between, and are then spirally wound.

However, the present invention is not limited thereto, and the electrode assembly 10 may have a structure in which the first and second electrodes 11 and 12 formed of a plurality of sheets are alternately stacked.

The case 15 is substantially formed as a cuboid, and an opening is formed on one side thereof. The cap assembly 20 includes a cap plate 28 covering the opening of the case 15, a first terminal 21 protruded outside of the cap plate 28 and electrically connected to the first electrode 11, a second terminal 22 electrically connected to the second electrode, a short circuit tab 41 electrically connected to the first terminal 21, and an deformable plate 43 electrically connected to the second terminal 22 and contacting the short circuit tab 41 according to deformation.

The cap plate 28 is formed of a thin plate and combined to the opening of the case 15. The cap plate 28 includes a sealing cap 27 formed in an electrolyte injection opening 29.

The first terminal 21 and the second terminal 22 penetrate cap plate 28 flanges 21a and 22a that are supported under the cap plate 28 and formed in lower portions thereof, and external circumferential surfaces of upper poles protruded outside the cap plate 28 are threaded. In addition, nuts 35 that support the terminals 21 and 22 at upper portions thereof are fastened to the terminals 21 and 22.

Gaskets 36 and 39 are respectively installed between the first terminal 21 and the cap plate 28 and between the second terminal 22 and the cap plate 28 so as to seal gaps between the terminals 21 and 22 and the cap plate 28.

The first terminal 21 is electrically connected to the first electrode 11 through a first lead tab 31, and the second terminal 22 is electrically connected to the second electrode 12 through a second lead tab 32.

Since a lower insulation member 34 is disposed at a lower portion of the cap plate 28, lower portions of the terminals 21 and 22 and upper portions of the lead tabs 31 and 32 are inserted into the lower insulation member 34.

With this structure, the first lead tab 31 electrically connects the first terminal 21 with the first electrode 11 and the second lead tab 32 electrically connects the second terminal 22 with the second electrode 12.

A short circuit hole 23 is formed in the cap plate 28, and the deformable plate 43 is inserted into the short circuit hole 23.

The short circuit tab 41 has a plate shape, and is disposed on the cap plate 28. The first terminal 21 is inserted into the short circuit tab 41, and is fixed to the first terminal 21 by the nut 35 provided in an upper portion of the short circuit tab 41 and combined to the first terminal 21. Accordingly, the short circuit tab 41 is electrically connected to the first terminal 21 through the nut 35.

Since a connection tab 38 is provided between the second terminal 22 and the nut 35, the connection tab 38 electrically connects the second terminal 22 and the cap plate 28. The second terminal 22 is inserted into a hole of the connection tab 38, and therefore the connection tab 38 is closely adhered to the cap plate 28 through the nut 35 provided thereon.

An upper insulation member 37 is provided between the short circuit tab 41 and the cap plate 28 for insulation there between. The upper insulation member 37 partially surrounds the first terminal 21, and the edge of the upper insulation member 37 surrounds a side end of the short circuit tab 41. Therefore, the short circuit tab 41 is safely supported by the upper insulation member 37, and deformation due to pressure caused by deformation of the deformable plate 43 can be minimized. Accordingly, the short circuit tab 41 and the deformable plate 43 can maintain a stable contact state.

The deformable plate 43 is inserted into the short circuit hole 23, and includes a notch 43a formed on a surface thereof, a frame portion 43b formed in a flat ring shape and attached to the cap plate 28 by welding, and a deformation portion 43c curved in an arc shape and protruded toward the electrode assembly 10. Accordingly, the deformable plate 43 is electrically connected to the second terminal 22 through the cap plate 28. The notch 43a is broken and emits gas outside when internal pressure of the case 15 is excessively increased.

In the short circuit tab 41, a round vent hole 41 a is formed in a portion corresponding to an upper portion of the short circuit hole 23. In addition, a hole is formed in a portion of the upper insulation member 37 corresponding to the upper portion of the short circuit hole 23.

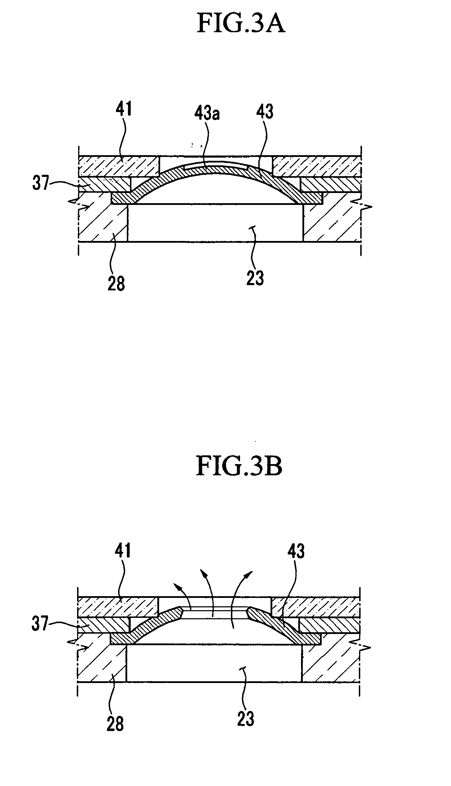

As shown in FIG. 3A, when the internal pressure of the rechargeable battery 110 is excessively increased, the deformation portion 43c that is originally protruded downward is deformed to protrude upward, and the first and second electrodes 11 and 12 are short circuited as the deformation portion 43a contacts the short circuit tab 41.

The deformable plate 43 contacts the short circuit tab 41 along an internal circumference of the vent hole 41a, and accordingly, a contact area of the deformable plate 43 and the short circuit tab 41 is large enough to maintain a stable contact state.

In addition, as shown in FIG. 3B, when the internal pressure of the case 15 is further increased after the first and second electrodes 11 and 12 are disconnected, the notch 43a of the deformable plate 43 is broken and internal gas is emitted outside there through. The gas may be emitted out through the vent hole 41a of the short tab 41.

As described, according to the first exemplary embodiment, when the temperature is increased or the internal pressure of the rechargeable battery 110 is excessively increased due to dissolution of the electrolyte solution, the deformation portion 43c provokes a short circuit to thereby prevent explosion or combustion of the rechargeable battery 110. The pressure that causes deformation of the deformable plate 43 can be accurately set because it can be easily controlled by changing the thickness and shape in design.

Particularly, a contact space of the deformable plate 43 and the short circuit tab 41 is separated from a space of the electrolyte solution so that combustion of the electrolyte solution due to flame or heat generated when the short circuit is occurs can be safely prevented. When the short circuit occurs, the current is instantly increased so that the internal temperature of the battery may be greatly increased when the short circuit occurs inside the case 15. However, as in the present exemplary embodiment, heat can be emitted outside through the short circuit tab 41 formed outside the case 15 so that excessive heat accumulation inside the case 15 can be prevented.

In addition, an elastic member such as a spring continuously receives pressure in a normal condition so that elasticity of the spring may be decreased or eliminated after a long period of time. In order to guarantee safety in relation to cycle-life of the rechargeable battery 110, the elastic member should operate under a predetermined pressure without losing elasticity during a use time of the rechargeable battery. However, the elasticity of the elastic member is changed so that it may not properly operate under the predetermined pressure during the use time of the rechargeable battery 110, thereby causing a safety problem. Therefore, when the deformable plate 43 is applied according to the present exemplary embodiment, the elastic member does not receive pressure in a normal condition so that it may operate under the predetermined pressure for a relatively long period of time.

In addition, when the internal pressure of the case 15 is further increased, the notch 43a is broken so that explosion of the rechargeable battery 110 can be prevented, and an additional vent member is not required since the deformable plate 43 functions as a vent.

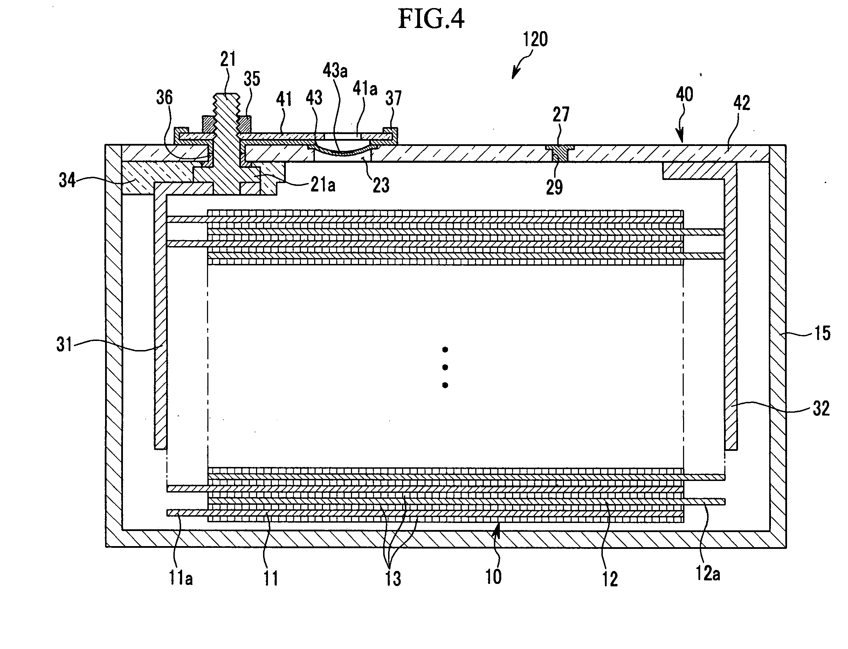

FIG. 4 is a cross-sectional view of a rechargeable battery according to a second exemplary embodiment of the present invention.

Referring to FIG. 4, a rechargeable battery 120 according to the second exemplary embodiment has the same structure as the rechargeable battery of the first exemplary embodiment, except that the rechargeable battery 120 does not include a second terminal. Therefore, no further description of the same structures will be provided.

As shown in FIG. 4, the rechargeable battery 120 according to the present exemplary embodiment includes a case 15 and a cap assembly 40 that closes and seals the case 15.

The cap assembly 40 includes a first terminal 21 protruded outside, a cap plate 42 combined to an opening of the case 15, and a short circuit tab 41 electrically connected to the first terminal 21 and provided on the cap plate 42.

The first terminal 21 penetrates the cap plate 42 and protrudes outside, and is electrically connected to the first electrode 11 through a first lead tab 31.

In a second electrode 12, a second lead tab 32 electrically connecting the second electrode 12 and the cap plate 42 is provided. A lower portion of the second lead tab 32 is attached to a second uncoated region 12a by welding, and an upper portion thereof is attached to the cap plate 42 by welding.

A short circuit hole 23 formed in the cap plate 42 is deformed when the internal temperature of the case 15 is increased to induce a short circuit of the cap plate 42 and the short circuit tab 41, and an deformable plate 43 where a notch 43a is formed is inserted therein.

A vent hole 41a and the short circuit tab 41 electrically connected to the first terminal 21 are formed on the short circuit hole 23. Thus, when the deformable plate 43 is deformed so that it contacts the short circuit tab 41, the first and second electrodes 11 and 12 are electrically connected so that a short circuit may occur there between.

According to the present exemplary embodiment, the second lead tab 32 is directly attached to the cap plate 42 so that contact resistance between the second terminal 12 and the cap plate 42 can be minimized.

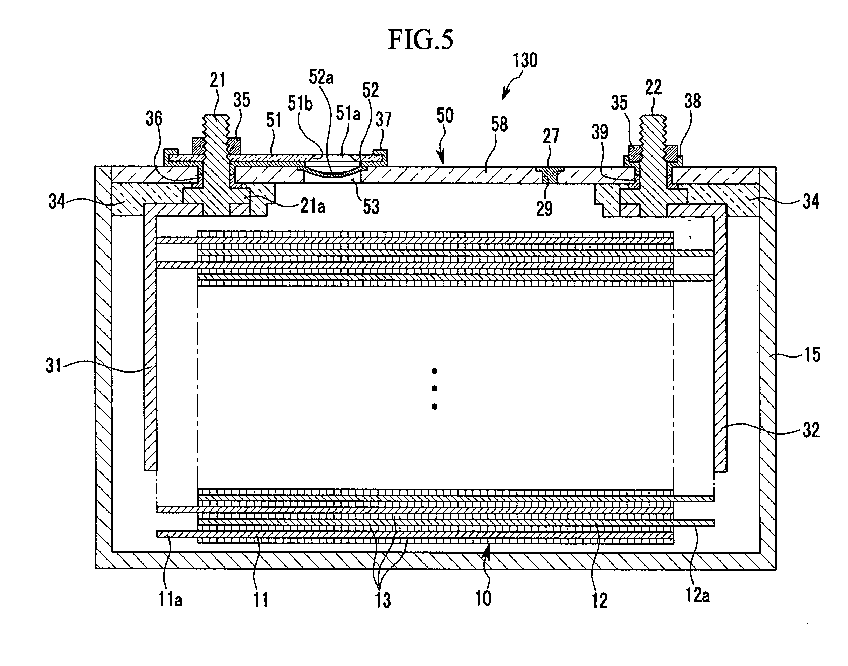

FIG. 5 is a cross-sectional view of a rechargeable battery according to a third exemplary embodiment of the present invention.

Referring to FIG. 5, a rechargeable battery 130 according to the third exemplary embodiment has a structure that is the same as the rechargeable battery of the first exemplary embodiment, excluding a short circuit tab structure, and therefore the same structures will not be further described.

As shown in FIG. 5, the rechargeable battery 130 according to the present exemplary embodiment includes a case 15 and a cap assembly 50 that closes and seals the case 15.

The cap assembly 50 includes a first terminal 21 protruded outside, a cap plate 58 combined to an opening of the case 15, and a short circuit tab 51 electrically connected to the first terminal 21 and provided on the cap plate 58.

The first terminal 21 and the second terminal 22 penetrate the cap plate 58 and protrude outside.

An deformable plate 52 that deforms when internal pressure of the case 15 is increased is inserted into a short circuit hole 53 formed in the cap plate 58. The deformable plate 53 induces a short circuit between the cap plate 58 and the short circuit tab 51, and a notch 52a is formed therein.

The short circuit tab 51 has a vent hole 51 a formed in a portion that corresponds to an upper portion of the short circuit tab 51. In this case, a vertical cross-section of an internal surface 51 b of the vent hole 51 a is curved in an arc shape so that the interior diameter of the vent hole 51 a is gradually decreased upward.

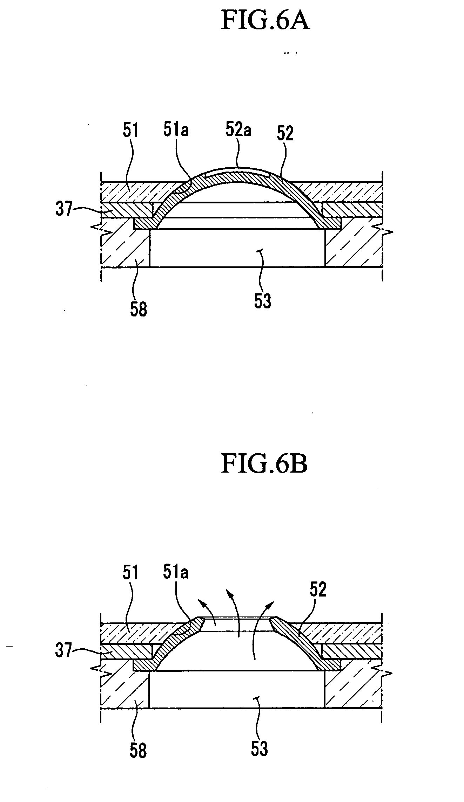

As shown in FIG. 6A, when internal pressure of the rechargeable battery 130 is increased, the deformable plate 52 is deformed upwardly so that it electrically contacts the short circuit tab 51. In this case, the short circuit tab 51 contacts the deformable plate 52 through the internal surface of the vent hole 51 a, and the internal surface 51 b of the vent hole 51 a is curved in the arc shape so that the curved deformable plate 52 and the short circuit tab 51 may form a large contact area.

As shown in FIG. 6B, when the internal pressure of the case 15 is further increased, the notch 52a of the deformable plate 52 is broken and internal gas may be emitted outside there through.

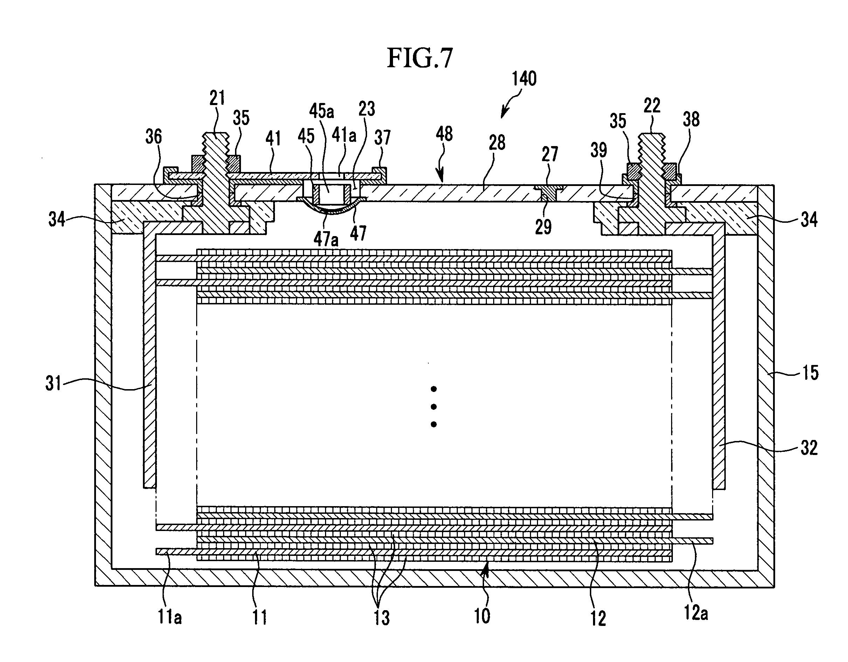

FIG. 7 is a cross-sectional view of a rechargeable battery according to a fourth exemplary embodiment of the present invention.

Referring to FIG. 7, a rechargeable battery 140 according to the present exemplary embodiment has the same structure as the rechargeable battery of the first exemplary embodiment, except that a middle member 45 is added to the rechargeable battery 140. Therefore, no further description for the same structures will be provided.

The rechargeable battery 140 according to the present exemplary embodiment includes a case 15 and a cap assembly 48 that closes and seals the case 15.

The cap assembly 48 includes a cap plate 28, a first terminal 21, a second terminal 22, a short circuit tab 41 provided on the cap plate 28, an deformable plate 47 disposed under a short hole 23 of the cap plate 28, and a middle member 45 provided between the short circuit tab 41 and the deformable plate 47.

The short circuit tab 41 is electrically connected to the first terminal 21, and the cap plate 28 is electrically connected to the second terminal 22. In addition, the deformable plate 47 is welded to the cap plate 28 under the short circuit hole 23 and is thus electrically connected to the cap plate 28.

The middle member 45 is thicker than the deformable plate 47, and is disposed between the short circuit tab 41 and the deformable plate 47. In addition, the middle member 45 is formed in a cylindrical pipe shape having an internal space. When the middle member 45 is welded to the deformable plate, the middle member 45 is welded along a lower end circumference of the middle member 45 for deformation of the deformable plate 47. In addition, an upper surface of the middle member 45 is disposed in parallel with the short circuit tab 41 so that the middle member 45 can sufficiently contact the short circuit tab 41.

The middle member 45 can be inversely deformed at a predetermined pressure level by controlling the weight and shape thereof.

Thus, when the deformable plate 47 is deformed to be convex upward, the middle member 45 is lifted and thus contacts the short circuit tab 41, and accordingly, the cap plate 28 is electrically connected to the short circuit tab 41 through the deformable plate 47 and the middle member 45.

A notch 47a is formed in the deformable plate 47, and a middle hole 45a is formed in the center of the middle member 45. When internal pressure of the case 15 is further increased, the notch 47a is broken and opened, and internal gas is emitted through the middle hole 45a and a vent hole 41a.

When the deformable plate 47 directly contacts the short circuit tab 41, the deformable plate 47 is melted due to an over current so that the short circuit may be blocked. This is because the deformable plate 47 does not sufficiently contact but partially contacts the short circuit tab 41.

However, according to the present exemplary embodiment, the middle member 45 can contact the short circuit tab 41 in a sufficient area and the middle member 45 is welded to the deformable plate 47 so that the short circuit can be prevented from being blocked.

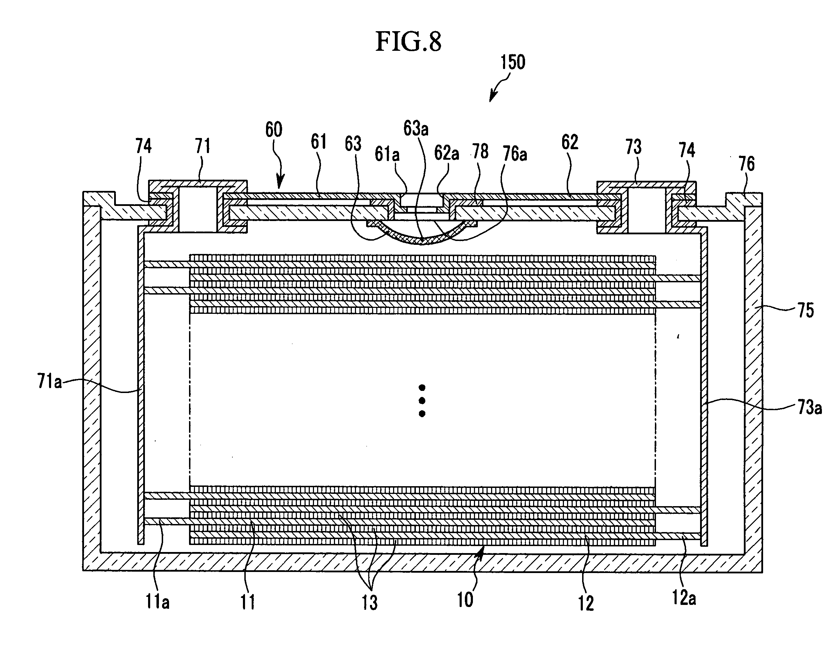

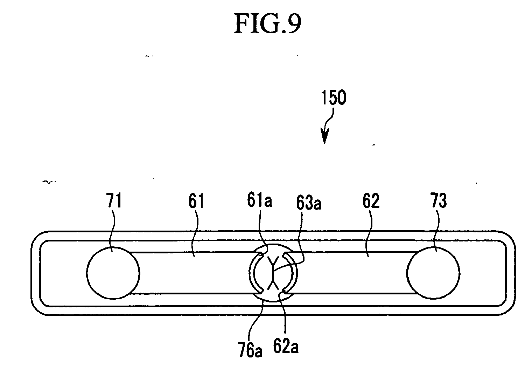

FIG. 8 is a cross-sectional view of a rechargeable battery according to a fifth exemplary embodiment of the present invention and FIG. 9 is a top plan view of the rechargeable battery according to the fifth exemplary embodiment of the present invention.

Referring to FIG. 8 and FIG. 9, a rechargeable battery 150 according to a fifth exemplary embodiment includes an electrode assembly 10, a case 75 to which the electrode assembly 10 is inserted, and a cap assembly 60 closing and sealing the case 75. The electrode assembly 10 includes a first electrode 11, a second electrode 12, and a separator 13 interposed between the first and second electrodes 11 and 12. The cap assembly 60 includes a cap plate 76 combined to an opening of the case 75, a first terminal 71 electrically connected to the first electrode 11, and a second terminal 73 electrically connected to the second electrode 12.

The cap plate 76 is formed of a thin plate, and has an opened short circuit hole 76a in a center thereof.

In addition, a first short circuit tab 61 electrically connected to the first terminal is provided in the first terminal 71, and the first short circuit tab 61 has a protrusion 61 a inserted into the short circuit hole 76a. A second short circuit tab 62 is provided in the second terminal 73, and the second short circuit tab 62 has a protrusion 62a inserted into the short circuit hole 76a.

The first terminal 71 and the second terminal 73 are formed in a rivet shape.

The first terminal 71 is electrically connected to a first electrode uncoated region 11 a through a first lead tab 71 a, and the second terminal 73 is electrically connected to a second electrode uncoated region 12a through a second lead tab 73a. Gaskets 74 are provided between the terminals 71 and 73 and the cap plate 76 for sealing and insulation.

The first short circuit tab 61 and the second short circuit tab 62 are inserted into the short circuit hole 76a on the cap plate 76 through an insulation member 26 and thus they are electrically insulated with the cap plate 76, and accordingly the cap plate 76 and the case 75 do not have electrical polarity.

The first terminal 71 and the second terminal 73 are located on both edges of the cap plate 61 along the longitudinal direction, one end of the first short circuit tab 61 is inserted into the first terminal 71, and the other end thereof having the protrusion 61 a is inserted into the short circuit hole 76a. One end of the second short circuit tab 62 is inserted into the second terminal 73, and the other end thereof having the protrusion 62a is inserted into the short circuit hole 76a.

In the short circuit hole 76a, the first short circuit tab 61 and the second short circuit tab 62 are disposed at a distance from each other, and the ends of the protrusions 61 a and 62a are substantially formed in an arc shape. An deformable plate 63 is provided in a lower portion of the short circuit hole 76a, and a notch 63a is formed in the deformable plate 63.

When internal pressure of the rechargeable battery 150 is increased, the deformable plate 63 is deformed to be lifted upward so that the first and second short circuit tabs 61 and 62 are electrically connected, and when the internal pressure of the rechargeable battery 150 is further increased in a short circuit state, the notch 63a is broken and internal gas is emitted out there through.

As described, according to the present exemplary embodiment, the short circuit tabs 61 and 62 are electrically connected to thereby prevent explosion of the battery due to an excessive increase of internal pressure of the rechargeable battery 150, and the short circuit tabs 61 and 62 are located outside the case 75 so that excessive internal heat generation in the rechargeable battery 150 due to a short circuit current can be prevented.

In addition, a current does not flow through the cap plate 76 so that overheating of the cap plate 76 can be prevented. Further, since the first and second short circuit tabs 61 and 62 are located outside the case 75, heat can be easily emitted out through the first and second short circuit tabs 61 and 62, and a short portion is separated from a location of the electrolyte solution so that combustion of the electrolyte solution can be prevented.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery comprising:
an electrode assembly (10) having a first electrode (11), a second electrode (12), and a separator (13) interposed between the first and the second electrodes (11, 12);
a case (15) for mounting the electrode assembly (10) therein; and
a cap assembly (20, 40, 48, 50, 60) comprising:
a cap plate (28, 42, 58, 76) for closing an opening of the case (15);
a pressure-deformable plate (43, 47, 52, 63) attached to the cap plate (28, 42, 58, 76), the deformable plate (43, 47, 52, 63) being in communication with the inside of the battery (110, 120, 130, 140, 150),
a short-circuit hole (23) is provided in the cap plate, wherein the pressure-deformable plate (43, 47, 52, 63) communicates with the inside of the battery via the short-circuit hole (23) and is inserted into or placed below the short circuit hole (23),
**characterized in that**
the cap assembly (20, 40, 48, 50, 60) further comprises a first tab (41, 51, 61) located outside of the case (15) on top of the short circuit hole (23) and electrically connected to the first electrode (11),
the pressure-deformable plate (43, 47, 52, 63) is separated from the first tab (41, 51, 61) and upon an increase of internal pressure deforms and contacts the first tab (41, 51, 61) establishing a short-circuit between the first and second electrodes on the outside of the case (15), and
the pressure-deformable plate (43, 47, 52, 63) comprises a notch (43a, 47a, 52a, 63a).

2. Rechargeable battery according to claim 1, wherein the notch (43a, 47a, 52a, 63a) is designed to provide a predetermined breaking point of the deformable plate (43, 47, 52, 63), and/or is provided in a central position of the deformable plate (43, 47, 52, 63).

3. Rechargeable battery according to any of the previous claims, wherein the deformable plate (43, 47, 52, 63):
is electrically connected to the second electrode (12) via the cap plate (28, 42, 58, 76).

4. Rechargeable battery according to any of the previous claims, wherein the deformable plate (43, 47, 52, 63) further comprises:
a curved or an arc or a convex shaped deformation portion (43c), curved toward and protruding into the interior of the battery (110, 120, 130, 140, 150); and/or
an outer frame portion (43b) formed in a ring-shape being attached to the cap plate (28, 42, 58, 76) and surrounding a deformation portion (43c) adapted to be deformed and having an arc or convex shape protruding towards the interior of the battery (110, 120, 130, 140, 150), the notch (43a, 47a, 52a, 63a) being formed within the deformation portion (43c).

5. Rechargeable battery according to claim 1, wherein the cap assembly (20, 40, 48, 50, 60) further comprises an upper insulation member (37) such that the first tab (41, 51, 61) is coupled to the cap plate (28, 42, 58, 76) with the upper insulation member (37) interposed there between to electrically isolate the first tab (41, 51, 61) from the cap plate (28, 42, 58, 76).

6. Rechargeable battery according to claim 5, wherein the upper insulation member (37) has a shape with an opening into which the first tab (41, 51) is inserted such that the edge of the upper insulation member (37) surrounds a side end of the first tab (41, 51).

7. Rechargeable battery according to any of claims 1 or 5 to 6, wherein the first tab (41, 51) comprises a vent hole (41 a, 51 a) formed at a position corresponding to the position of the short circuit hole (23), and/or formed directly above the short circuit hole (23).

8. Rechargeable battery according to claim 7, wherein the vent hole (41 a, 51 a):
has a round shape; and/or
a circular cross section; and/or
a cone like or truncated cone like shape; and/or
is provided with a cross section having an upwardly decreasing diameter.

9. Rechargeable battery according to any of the previous claims, wherein a middle member (45) is provided between the first tab (41) and the deformable plate (47).

10. Rechargeable battery according to claim 9, wherein the middle member (45):
is attached to the deformable plate (47); and/or
has a larger thickness than the deformable plate (47);
is welded along its lower end circumference to the deformable plate (47); and/or
comprises a hole (45a) formed at a location corresponding to that of the notch (47a) of the deformable plate (47) and/or formed at a location corresponding to that of the short circuit hole (23).

11. Rechargeable battery according to any of the previous claims, wherein the cap assembly (20, 40, 48, 50, 60) further comprises:
a first terminal (21, 71) protruding to the outside of the cap plate (28, 42, 58, 76) and electrically connected to the first electrode (11) and the first tab (41, 51, 61);
a gasket (36, 74) interposed between the cap plate (28, 42, 58, 76) and the first terminal (21, 71) to insulate the cap plate (28, 42, 58, 76) and the first terminal (21, 71) from each other;
a second terminal (22, 72) connected to the second electrode (12) protruding to the outside of the battery (110, 120, 130, 140, 150); and
a gasket (39, 74) for sealing the cap plate (28, 76) in the region of the second terminal (22, 72), and a connection tab (38) for electrically connecting the second terminal (22, 72) and the cap plate (28, 76) such that the deformable plate (43, 47, 52, 63) contacts the second terminal (22, 72) via the cap plate (28, 76) and the deformable plate (43, 47, 52, 63) is adapted to contact the first terminal (21, 71) via the first tab (41, 51, 61).

12. Rechargeable battery according to claim 1, further comprising:
a second tab (62) connected to the second electrode (12) being insulated from the cap plate (76) by an insulating member (26), the first tab (61) and the second tab (62) being provided with protrusions (61a, 62a) which extend into the short-circuit hole (76a) formed in the cap plate (76); and wherein
the deformable plate (63) is adapted to be deformed such that it contacts the protrusions of the first tab (61) and the second tab (62) to thereby short-circuiting the first electrode (11) and the second electrode (12).

13. Method for providing venting and short-circuiting of a rechargeable battery (110, 120, 130, 140), the method comprising the steps of:
providing a first tab (41, 51) on a cap plate (28, 42, 58) of a battery (110, 120, 130, 140), the first tab (41, 51) being connected to the first electrode (11) of the battery (110, 120, 130, 140);
providing a pressure-deformable plate (43, 47, 52) attached to the cap plate (28, 42, 58) of the battery (110, 120, 130, 140) and being electrically connected to a second electrode (12) of the battery (110, 120, 130, 140);
providing a short-circuit hole (23) in the cap plate (28, 42, 58), the pressure-deformable plate (43, 47, 52) being in communication with the inside of the battery through the short-circuit hole (23) and being inserted into or placed below the short circuit hole (23), wherein the first tab (41, 51) is placed above the short-circuit hole (23);
deforming the pressure-deformable plate (43, 47, 52) upon an increase of internal pressure inside the battery (110, 120, 130, 140);
making contact between the pressure-deformable plate (43, 47, 52) and the first tab (41, 51) of the battery (110, 120, 130, 140) as a result of the deformation of the pressure-deformable plate (43, 47, 52) and thus short-circuiting the first and the second electrodes (11, 12) of the battery (110, 120, 130, 140) to prevent its explosion or combustion; and
breaking a notch (43a, 52a) of the pressure-deformable plate (43, 47, 52)
venting of gas from the interior of the battery through the short-circuit hole (23) and the notch (43a, 52a) of the pressure-deformable plate (43, 47, 52).

## Patentansprüche

1. Wiederaufladbare Batterie, umfassend:
eine Elektrodenanordnung (10) mit einer ersten Elektrode (11), einer zweiten Elektrode (12) und einem zwischen die erste und die zweite Elektrode (11, 12) geschalteten Separator (13);
ein Gehäuse (15) zum Anbringen der Elektrodenanordnung (10) in diesem; und
eine Abdeckanordnung (20, 40, 48, 50, 60), umfassend:
eine Abdeckplatte (28, 42, 58, 76) zum Verschließen einer Öffnung des Gehäuses (15);
eine an der Abdeckplatte (28, 42, 58, 76) befestigte druckverformbare Platte (43, 47, 52, 63), wobei die verformbare Platte (43, 47, 52, 63) mit dem Inneren der Batterie (110, 120, 130, 140, 150) in Verbindung steht,
ein in der Abdeckplatte vorgesehenes Kurzschlussloch (23), wobei die druckverformbare Platte (43, 47, 52, 63) mit dem Inneren der Batterie über das Kurzschlussloch (23) in Verbindung steht und in das Kurzschlussloch (23) eingesetzt oder unter diesem befindlich ist,
**dadurch gekennzeichnet, dass**
die Abdeckanordnung (20, 40, 48, 50, 60) ferner einen ersten Steg (41, 51, 61) umfasst, der sich außerhalb des Gehäuses (15) auf dem Kurzschlussloch (23) befindet und elektrisch mit der ersten Elektrode (11) verbunden ist,
die druckverformbare Platte (43, 47, 52, 63) von dem ersten Steg (41, 51, 61) getrennt ist und sich bei Erhöhung eines Innendrucks deformiert und den ersten Steg (41, 51, 61) kontaktiert und an der Außenseite des Gehäuses (15) einen Kurzschluss zwischen der ersten und zweiten Elektrode herstellt, und
die druckverformbare Platte (43, 47, 52, 63) eine Kerbe (43a, 47a, 52a, 63a) besitzt.

2. Wiederaufladbare Batterie nach Anspruch 1, wobei die Kerbe (43a, 47a, 52a, 63a) ausgestaltet ist, eine Sollbruchstelle der verformbaren Platte (43, 47, 52, 63) bereitzustellen und/oder in einer mittigen Position der verformbaren Platte (43, 47, 52, 63) vorgesehen ist.

3. Wiederaufladbare Batterie nach einem der vorstehenden Ansprüche, wobei die verformbare Platte (43, 47, 52, 63) über die Abdeckplatte (28, 42, 58, 76) elektrisch mit der zweiten Elektrode (12) verbunden ist.

4. Wiederaufladbare Batterie nach einem der vorstehenden Ansprüche, wobei die verformbare Platte (43, 47, 52, 63) ferner umfasst:
einen gekrümmten oder bogenförmigen oder konvexen Verformungsabschnitt (43c), gekrümmt in Richtung und vorspringend in das Innere der Batterie (110, 120, 130, 140, 150); und/oder
einen in Ringform ausgebildeten Außenrahmenabschnitt (43b), der an der Abdeckplatte (28, 42, 58, 76) befestigt ist und einen Verformungsabschnitt (43c) umgibt, der ausgestaltet ist, deformiert zu werden und eine Bogenform oder konvexe Form aufweist, die in in Richtung des Inneren der Batterie (110, 120, 130, 140, 150) vorspringt, wobei die Kerbe (43a, 47a, 52a, 63a) innerhalb des Verformungsbereichs (43c) ausgebildet ist.

5. Wiederaufladbare Batterie nach Anspruch 1, wobei die Abdeckanordnung (20, 40, 48, 50, 60) ferner ein oberes Isolierelement (37) derart umfasst, dass der erste Steg (41, 51, 61) so mit der Abdeckplatte (28, 42, 58, 76) verbunden ist, dass das obere Isolierelement (37) dazwischen liegt, um den ersten Steg (41, 51, 61) von der Abdeckplatte (28, 42, 58, 76) elektrisch zu isolieren.

6. Wiederaufladbare Batterie nach Anspruch 5, wobei das obere Isolierelement (37) eine Form mit einer Öffnung aufweist, in welche der erste Steg (41, 51) so eingesetzt ist, dass der Rand des oberen Isolierelements (37) ein seitliches Ende des ersten Stegs (41, 51) umgibt.

7. Wiederaufladbare Batterie nach einem der Ansprüche 1 oder 5 bis 6, wobei der erste Steg (41, 51) ein Entlüftungsloch (41 a, 51 a) umfasst, das an einer der Position des Kurzschlusslochs (23) entsprechenden Position ausgebildet ist und/oder direkt über dem Kurzschlussloch (23) ausgebildet ist.

8. Wiederaufladbare Batterie nach Anspruch 7, wobei das Entlüftungsloch (41 a, 51 a):
eine runde Form aufweist; und/oder
einen kreisförmigen Querschnitt besitzt; und/oder
eine kegelförmige oder kegelstumpfförmige Gestalt aufweist; und
mit einem Querschnitt versehen ist, der einen nach oben hin abnehmenden Durchmesser aufweist.

9. Wiederaufladbare Batterie nach einem der vorstehenden Ansprüche, wobei zwischen dem ersten Steg (41) und der verformbaren Platte (47) ein Mittelteil (45) vorgesehen ist.

10. Wiederaufladbare Batterie nach Anspruch 9, wobei das Mittelteil (45):
an der verformbaren Platte (47) befestigt ist; und/oder
eine größere Dicke aufweist als die verformbare Platte (47);
entlang seines Umfangs am unteren Ende mit der verformbaren Platte (47) verschweißt ist; und/oder
ein Loch (45a) aufweist, das an einer Stelle ausgebildet ist, die derjenigen der Kerbe (47a) der verformbaren Platte (47) entspricht und/oder an einer Stelle ausgebildet ist, die derjenigen des Kurzschlusslochs (23) entspricht.

11. Wiederaufladbare Batterie nach einem der vorstehenden Ansprüche, wobei die Abdeckanordnung (20, 40, 48, 50, 60) ferner umfasst:
eine erste Klemme (21, 71), die zur Außenseite der Abdeckplatte (28, 42, 58, 76) hin vorsteht und elektrisch mit der ersten Elektrode (11) und dem ersten Steg (41, 51, 61) verbunden ist;
eine Dichtung (36, 47), die zwischen der Abdeckplatte (28, 42, 58, 76) und der ersten Klemme (21, 71) angeordnet ist, um die Abdeckplatte (28, 42, 58, 76) und die erste Klemme (21, 71) voneinander zu isolieren;
eine mit der zweiten Elektrode (12) verbundene zweite Klemme (22, 72), die zur Außenseite der Batterie (110, 120, 130, 140, 150) hin vorsteht; und
eine Dichtung (39, 74) zum Abdichten der Abdeckplatte (28, 76) im Bereich der zweiten Klemme (22, 72) sowie ein Verbindungsstück (38) zum elektrischen Verbinden der zweiten Klemme (22, 72) und der Abdeckplatte (28, 76) derart, dass die verformbare Platte (43, 47, 52, 63) über die Abdeckplatte (28, 76) mit der zweiten Klemme (22, 72) in Kontakt gelangt, und die verformbare Platte (43, 47, 52, 63) ausgeführt ist, über den ersten Steg (41, 51, 61) mit der ersten Klemme (21, 71) in Kontakt zu gelangen.

12. Wiederaufladbare Batterie nach Anspruch 1, ferner umfassend:
einen mit der zweiten Elektrode (12) verbundenen zweiten Steg (62), der durch ein Isolierelement (26) von der Abdeckplatte (76) isoliert ist, wobei der erste Steg (61) und der zweite Steg (62) mit Vorsprüngen (61 a, 62a) versehen sind, die sich in das in der Abdeckplatte (76) ausgebildete Kurzschlussloch (76a) hinein erstrecken; und wobei
die verformbare Platte (63) ausgeführt ist, derart verformt zu werden, dass sie mit den Vorsprüngen des ersten Stegs (61) und des zweiten Stegs (62) so in Kontakt gelangt, dass sie die erste Elektrode (11) und die zweite Elektrode (12) kurzschließt.

13. Verfahren zum Bereitstellen einer Entlüftung und eines Kurzschließens einer wiederaufladbaren Batterie (110, 120, 130, 140), wobei das Verfahren folgende Schritte umfasst:
Vorsehen eines ersten Stegs (41, 51) auf einer Abdeckplatte (28, 42, 58) einer Batterie (110, 120, 130, 140), wobei der erste Steg (41, 51) mit der ersten Elektrode (11) der Batterie (110, 120, 130, 140) verbunden ist;
Vorsehen einer druckverformbaren Platte (43, 47, 52), die an der Abdeckplatte (28, 42, 58) der Batterie (110, 120, 130, 140) befestigt ist und elektrisch mit einer zweiten Elektrode (12) der Batterie (110, 120, 130, 140) verbunden ist;
Vorsehen eines Kurzschlusslochs (23) in der Abdeckplatte (28, 42, 58), wobei die druckverformbare Platte (43, 47, 52) über das Kurzschlussloch (23) mit dem Inneren der Batterie in Verbindung steht und in das Kurzschlussloch (23) eingesetzt oder unter diesem befindlich ist, wobei sich der erste Steg (41, 51) über dem Kurzschlussloch (23) befindet;
Verformen der druckverformbaren Platte (43, 47, 52) bei Erhöhung des Innendrucks in der Batterie (110, 120, 130, 140);
Herstellung eines Kontakts zwischen der druckverformbaren Platte (43, 47, 52) und dem ersten Steg (41, 51) der Batterie (110, 120, 130, 140) als Ergebnis der Verformung der druckverformbaren Platte (43, 47, 52) und somit Kurzschließen der ersten und zweiten Elektrode (11, 12) der Batterie (110, 120, 130, 140), um deren Explosion oder Verbrennung zu verhindern; und
Brechen einer Kerbe (43a, 52a) der druckverformbaren Platte (43, 47, 52);
Entlüften eines Gases aus dem Inneren der Batterie durch das Kurzschlussloch (23) und der Kerbe (43a, 52a) der druckverformbaren Platte (43, 47, 52).

## Revendications

1. Batterie rechargeable comprenant :
un ensemble électrodes (10) comportant une première électrode (11), une deuxième électrode (12), et un séparateur (13) intercalé entre les première et deuxième électrodes (11, 12) ;
un boîtier (15) pour monter l'ensemble électrodes (10) en son sein ; et
un ensemble de couverture (20, 40, 48, 50, 60) comprenant :
une plaque de couverture (28, 42, 58, 76) pour fermer une ouverture du boîtier (15) ;
une plaque déformable par pression (43, 47, 52, 63) fixée à la plaque de couverture (28, 42, 58, 76), la plaque déformable (43, 47, 52, 63) étant en communication avec l'intérieur de la batterie (110, 120, 130, 140, 150),
un trou de court-circuit (23) est formé dans la plaque de couverture, la plaque déformable par pression (43, 47, 52, 63) communiquant avec l'intérieur de la batterie par le biais du trou de court-circuit (23) et étant insérée dans, ou placée sous, le trou de court-circuit (23),
**caractérisée en ce que** :
l'ensemble de couverture (20, 40, 48, 50, 60) comprend, en outre, une première languette (41, 51, 61) située à l'extérieur du boîtier (15) sur le dessus du trou de court-circuit (23) et reliée électriquement à la première électrode (11),
la plaque déformable par pression (43, 47, 52, 63) est séparée de la première languette (41, 51, 61) et, lors d'une augmentation de la pression interne, se déforme et entre en contact avec la première languette (41, 51, 61), créant un court-circuit entre les première et seconde électrodes sur l'extérieur du boîtier (15), et
la plaque déformable par pression (43, 47, 52, 63) comprend une encoche (43a, 47a, 52a, 63a).

2. Batterie rechargeable selon la revendication 1, dans laquelle l'encoche (43a, 47a, 52a, 63a) est conçue pour constituer un point de rupture prédéterminé de la plaque déformable (43, 47, 52, 63), et/ou est située en une position centrale de la plaque déformable (43, 47, 52, 63).

3. Batterie rechargeable selon l'une quelconque des revendications précédentes, dans laquelle la plaque déformable (43, 47, 52, 63) :
est reliée électriquement à la deuxième électrode (12) par l'intermédiaire de la plaque de couverture (28, 42, 58, 76).

4. Batterie rechargeable selon l'une quelconque des revendications précédentes, dans laquelle la plaque déformable (43, 47, 52, 63) comprend, en outre :
une partie de déformation de forme convexe, arquée ou incurvée (43c), incurvée vers, et faisant saillie dans, l'intérieur de la batterie (110, 120, 130, 140, 150) ; et/ou
une partie de châssis externe (43b) formée en un anneau, étant fixée à la plaque de couverture (28, 42, 58, 76) et entourant une partie de déformation (43c) apte à être déformée et présentant une forme convexe ou arquée faisant saillie vers l'intérieur de la batterie (110, 120, 130, 140, 150), l'encoche (43a, 47a, 52a, 63a) étant formée au sein de la partie de déformation (43c).

5. Batterie rechargeable selon la revendication 1, dans laquelle l'ensemble de couverture (20, 40, 48, 50, 60) comprend, en outre, un élément isolant supérieur (37) de manière que la première languette (41, 51, 61) soit accouplée à la plaque de couverture (28, 42, 58, 76), l'élément isolant supérieur (37) étant intercalé entre elles pour isoler électriquement la première languette (41, 51, 61) de la plaque de couverture (28, 42, 58, 76).

6. Batterie rechargeable selon la revendication 5, dans laquelle l'élément isolant supérieur (37) présente une forme avec une ouverture dans laquelle la première languette (41, 51) est insérée de manière que le bord de l'élément isolant supérieur (37) entoure une extrémité latérale de la première languette (41, 51).

7. Batterie rechargeable selon l'une quelconque des revendications 1 ou 5 à 6, dans laquelle la première languette (41, 51) comprend un évent (41 a, 51 a) formé en une position correspondant à la position du trou de court-circuit (23), et/ou formé directement au-dessus du trou de court-circuit (23).

8. Batterie rechargeable selon la revendication 7, dans laquelle l'évent (41 a, 51 a) :
a une forme ronde ; et/ou
une section transversale circulaire ; et/ou
une forme conique ou tronconique ; et/ou
présente une section transversale ayant un diamètre allant en diminuant vers le haut.

9. Batterie rechargeable selon l'une quelconque des revendications précédentes, dans laquelle un élément central (45) est situé entre la première languette (41) et la plaque déformable (47).

10. Batterie rechargeable selon la revendication 9, dans laquelle l'élément central (45) :
est fixé à la plaque déformable (47) ; et/ou
a une plus grande épaisseur que la plaque déformable (47) ;
est soudé le long de sa circonférence d'extrémité inférieure à la plaque déformable (47) ; et/ou
comprend un trou (45a) formé en un emplacement correspondant à celui de l'encoche (47a) de la plaque déformable (47) et/ou formé en un emplacement correspondant à celui du trou de court-circuit (23).

11. Batterie rechargeable selon l'une quelconque des revendications précédentes, dans laquelle l'ensemble de couverture (20, 40, 48, 50, 60) comprend, en outre :
une première borne (21, 71) faisant saillie à l'extérieur de la plaque de couverture (28, 42, 58, 76) et reliée électriquement à la première électrode (11) et à la première languette (41, 51, 61) ;
un joint (36, 74) intercalé entre la plaque de couverture (28, 42, 58, 76) et la première borne (21, 71) pour isoler la plaque de couverture (28, 42, 58, 76) et la première borne (21, 71) l'une de l'autre ;
une deuxième borne (22, 72) reliée à la deuxième électrode (12) faisant saillie à l'extérieur de la batterie (110, 120, 130, 140, 150) ; et
un joint (39, 74) pour étancher la plaque de couverture (28, 76) dans la région de la deuxième borne (22, 72), et une languette de connexion (38) pour relier électriquement la deuxième borne (22, 72) et la plaque de couverture (28, 76) de manière que la plaque déformable (43, 47, 52, 63) entre en contact avec la deuxième borne (22, 72) par l'intermédiaire de la plaque de couverture (28, 76) et la plaque déformable (43, 47, 52, 63) est apte à entrer en contact avec la première borne (21, 71) par l'intermédiaire de la première languette (41, 51, 61).

12. Batterie rechargeable selon la revendication 1, comprenant, en outre :
une deuxième languette (62) reliée à la deuxième électrode (12) en étant isolée de la plaque de couverture (76) par un élément isolant (26), la première languette (61) et la deuxième languette (62) étant pourvues de saillies (61 a, 62a) qui s'étendent dans le trou de court-circuit (76a) formé dans la plaque de couverture (76) ; et
dans laquelle la plaque déformable (63) est apte à être déformée de manière à entrer en contact avec les saillies de la première languette (61) et de la deuxième languette (62) afin de mettre en court-circuit la première électrode (11) et la deuxième électrode (12).

13. Procédé pour permettre la purge et la mise en court-circuit d'une batterie rechargeable (110, 120, 130, 140, 150), le procédé comprenant les étapes consistant à:
prévoir une première languette (41, 51) sur une plaque de couverture (28, 42, 58) d'une batterie (110, 120, 130, 140), la première languette (41, 51) étant reliée à la première électrode (11) de la batterie (110, 120, 130, 140) ;
prévoir une plaque déformable par pression (43, 47, 52) fixée à la plaque de couverture (28, 42, 58) de la batterie (110, 120, 130, 140) et étant reliée électriquement à une deuxième électrode (12) de la batterie (110, 120, 130, 140) ;
prévoir un trou de court-circuit (23) dans la plaque de couverture (28, 42, 58), la plaque déformable par pression (43, 47, 52) étant en communication avec l'intérieur de la batterie par le biais du trou de court-circuit (23) et étant insérée dans, ou placée sous, le trou de court-circuit (23), la première languette (41, 51) étant placée au-dessus du trou de court-circuit (23) ;
déformer la plaque déformable par pression (43, 47, 52) lors d'une augmentation de la pression interne à l'intérieur de la batterie (110, 120, 130, 140) ;
réaliser un contact entre la plaque déformable par pression (43, 47, 52) et la première languette (41, 51) de la batterie (110, 120, 130, 140) en conséquence de la déformation de la plaque déformable par pression (43, 47, 52) et donc mettre en court-circuit les première et deuxième électrodes (11, 12) de batterie (110, 120, 130, 140) afin d'empêcher son explosion ou sa combustion ; et
rompre une encoche (43a, 52a) de la plaque déformable par pression (43, 47, 52) ;
purger l'intérieur de la batterie de ses gaz par le trou de court-circuit (23) et l'encoche (43a, 52a) de la plaque déformable par pression (43, 47, 52).
